(19) Europäisches Patentamt
European Patent Office
Office européen des brevets

(11) **EP 1 908 622 A1**

(12) **EUROPEAN PATENT APPLICATION**
published in accordance with Art. 153(4) EPC

(43) Date of publication:
**09.04.2008 Bulletin 2008/15**

(51) Int Cl.:
***B60L 3/00*** (2006.01)       ***B60L 11/18*** (2006.01)
***H02J 7/00*** (2006.01)       ***H02J 7/04*** (2006.01)
***H02J 7/16*** (2006.01)

(21) Application number: **06832442.5**

(22) Date of filing: **09.11.2006**

(86) International application number:
**PCT/JP2006/322343**

(87) International publication number:
**WO 2007/055264 (18.05.2007 Gazette 2007/20)**

(84) Designated Contracting States:
**DE FR**

(30) Priority: **10.11.2005 JP 2005325679**
**06.12.2005 JP 2005351681**

(71) Applicant: **MATSUSHITA ELECTRIC INDUSTRIAL CO., LTD.**
**Osaka 571-8501 (JP)**

(72) Inventors:
• **ODAJIMA, Y. c/o Matsushita Electric Ind. Co. Ltd.**
**Chuo-ku, Osaka-shi, Osaka, 540-6207 (JP)**
• **MORITA, K. c/o Matsushita Electric Ind. Co. Ltd.**
**Chuo-ku, Osaka-shi, Osaka, 540-6207 (JP)**

(74) Representative: **Pautex Schneider, Nicole Véronique et al**
**Novagraaf International SA**
**25, avenue du Pailly**
**1220 Les Avanchets - Geneva (CH)**

(54) **VEHICLE SOURCE DEVICE**

(57)     A vehicle source device capable of performing a more accurate temperature-rise corresponding to the ability of the capacitor is provided.

To this end, the correlation of the temperature and the internal resistance corresponding to the ability of the current capacitor in time of activation is obtained in advance, the internal resistance is obtained for every repetition of charge/discharge, and the temperature of the inside of the capacitor is obtained from the correlation. Since the accurate temperature of the inside of the capacitor is obtained, the capacitor is accurately temperature-raised to the target temperature.

FIG. 1

EP 1 908 622 A1

**Description**

TECHNICAL FIELD

The present invention relates to an emergency power supply of electronic equipment that uses battery etc., in particular, to a vehicle source device used in an electronic brake system etc. for electrically braking a vehicle.

BACKGROUND ART

Development in hybrid cars and electric automobiles is rapidly advancing in recent years, and accompanied therewith, various proposals from a mechanical hydraulic control to an electrical hydraulic control of a conventional art have been proposed regarding the braking of the vehicle.

Generally, a battery is used as a power supply to electrically perform hydraulic control of a vehicle, but in this case, hydraulic control cannot be performed with only the battery if power supply is interrupted for some reason, and braking of the vehicle might become impossible.

Thus, a proposal is made to respond to an emergency by mounting a storage element such as a large-capacity capacitor as an emergency auxiliary power supply in addition to the battery.

The capacitor of such vehicle source device cannot satisfy the specification for the original vehicle source device due to the characteristic of the general capacitor that the internal resistance suddenly becomes large and the capacity suddenly becomes small at low temperature, in particular, when the vehicle is activated while being stored under low temperature.

A configuration is proposed to flow current by forcibly performing charge/discharge on the battery to generate heat by internal resistance of the battery and raise the temperature in an example using a battery instead of the capacitor for the storage element.

The prior art documents related to the invention include patent document 1.

One example of a configuration for raising the temperature of the battery will be described below with respect to a hybrid vehicle.

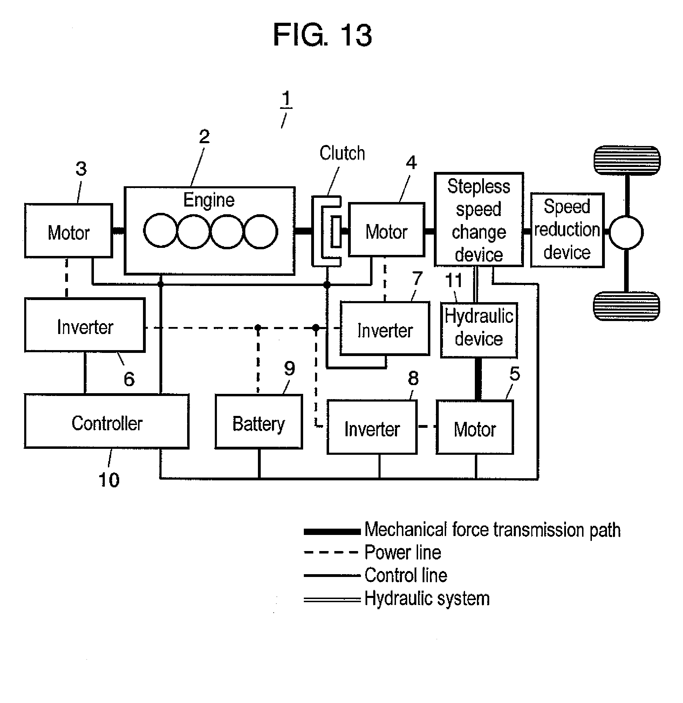

FIG. 13 shows a block configuration diagram of a conventional hybrid vehicle.

Hybrid vehicle 1 is basically configured by engine 2, a plurality of motors 3, 4, 5, inverters 6, 7, 8 connected thereto, battery 9 for supplying power, and controller 10 for controlling the entire system.

If the ambient temperature is a low temperature (e.g., several ten degrees below the freezing point) when activating the hybrid vehicle 1, battery 9 cannot exhibit the original required performance.

Controller 10 performs an operation of forcibly charging/discharging battery 9 to raise the temperature if controller 10 is in low temperature environment.

Specifically, in discharging, motor 3 is driven to start or assist engine 2, or motor 5 connected to hydraulic device 11 is driven at high speed.

In charging, motor 3 is used as a power generator, and the driving force of engine 2 is converted to power to charge battery 9.

The temperature of battery 9 rises by charging/discharging battery 9, so that the required performance of the vehicle can be satisfied.

According to such operation, the temperature of battery 9 serving as a storage element can be reliably raised, but it is difficult to apply such method to the capacitor.

This is due to the following reasons.

A conventional method determines the lowness of the ambient temperature not only from the battery temperature sensor (not shown) but also from the internal resistance of battery 9. Thus, the temperature inside battery 9 can be accurately determined.

Therefore, the temperature of the inside of the capacitor can be accurately determined through the method similar to that of the battery using the characteristic that internal resistance becomes large and the capacity becomes small at low temperature even with respect to the capacitor.

However, the capacitor has characteristic that the internal resistance gradually changes even from lowering in ability caused by degradation. Regarding such aspect, the method is inaccurate in terms of temperature-rise control to the target temperature in time of change in capacitor ability since correction with respect to degradation is not taken into consideration in the conventional method.

Therefore, in temperature-raising the capacitor, the temperature tends to deviate from the ultimate target temperature unless the charge/discharge control is performed in view of the current ability of the capacitor.

Regarding the ability of the capacitor, when a plurality of vehicle source devices is manufactured, that having the lowest internal resistance and a large capacity is defined as having 100% ability, and as 0% ability when reaching the internal resistance value and the capacitance value in the degradation limit at where the capacitor cannot be used as the vehicle source device.
[Patent document 1] Unexamined Japanese Patent Publication No. 3449226

DISCLOSURE OF THE INVENTION

To solve the problems of the conventional art, a vehicle source device of the present invention obtains a correlation of the temperature and the internal resistance corresponding to the ability of the current capacitor in advance in time of activation, obtains the internal resistance for every repetition of charging/discharging, and obtains the temperature of the inside of the capacitor from the correlation.
According to the present configuration, an accurate temperature of the inside of the capacitor can be obtained. As a result, the temperature can be accurately raised up to the target temperature by taking the ability of the capacitor into consideration according to the vehicle source device of the present invention, and thus a vehicle source device capable of sufficiently exhibiting the original required performance is obtained even if the hybrid vehicle is activated at low temperature.

BRIEF DESCRIPTION OF THE DRAWINGS

FIG. 1 is a block circuit diagram of a vehicle source device according to a first embodiment of the present invention.
FIG. 2 is a flowchart showing the operation of the vehicle source device according to the first embodiment of the present invention.
FIG. 3A is a temporal capacitor voltage characteristics diagram in time of temperature-rise of the vehicle source device according to the first embodiment of the present invention.
FIG. 3B is a temporal charging/discharging current characteristics diagram in time of temperature-rise of the vehicle source device according to the first embodiment of the present invention.
FIG. 4 is a temperature characteristics diagram of an internal resistance and a capacity corresponding to the degradation of a capacitor of the vehicle source device according to the first embodiment of the present invention.
FIG. 5 is a flowchart showing the operation of a vehicle source device according to a second embodiment of the present invention.
FIG. 6A is a temporal capacitor voltage characteristics diagram in time of temperature-rise of the vehicle source device according to the second embodiment of the present invention.
FIG. 6B is a temporal charging/discharging current characteristics diagram in time of temperature-rise of the vehicle source device according to the second embodiment of the present invention.
FIG. 7 is a flowchart showing the operation of a vehicle source device according to a third embodiment of the present invention.
FIG. 8A is a temporal partial capacitor voltage characteristics diagram in time of temperature-rise of the vehicle source device according to the third embodiment of the present invention.
FIG. 8B is a temporal partial charging/discharging current characteristics diagram in time of temperature-rise of the vehicle source device according to the third embodiment of the present invention.
FIG. 9 is a flowchart showing the operation of a vehicle source device according to a fourth embodiment of the present invention.
FIG. 10 is a correlation diagram showing a degradation limit value for every temperature in the capacity and the internal resistance of the capacitor of the vehicle source device according to the fourth embodiment of the present invention.
FIG. 11 is a block circuit diagram of a vehicle source device according to a fifth embodiment of the present invention.
FIG. 12 is a block circuit diagram of a vehicle source device according to a sixth embodiment of the present invention.
FIG. 13 is a block configuration diagram of a conventional hybrid vehicle.

REFERENCE MARKS IN THE DRAWINGS

20    vehicle source device
21    DC power supply
22    load
23    capacitor
24    charging circuit

25 discharging circuit
26 DC power supply voltmeter
27 capacitor voltmeter
28 capacitor ammeter
29 temperature sensor
30 switch
31 microcomputer
32 heater

PREFERRED EMBODIMENTS FOR CARRYING OUT OF THE INVENTION

The preferred embodiment for carrying out the invention will now be described with reference to the drawings. The vehicle source device for braking the hybrid vehicle will be described by way of example.

(First embodiment)

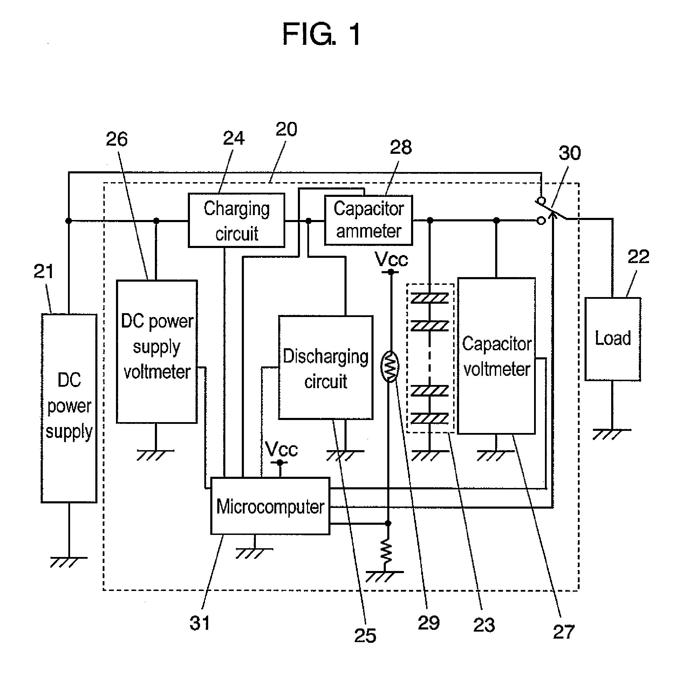

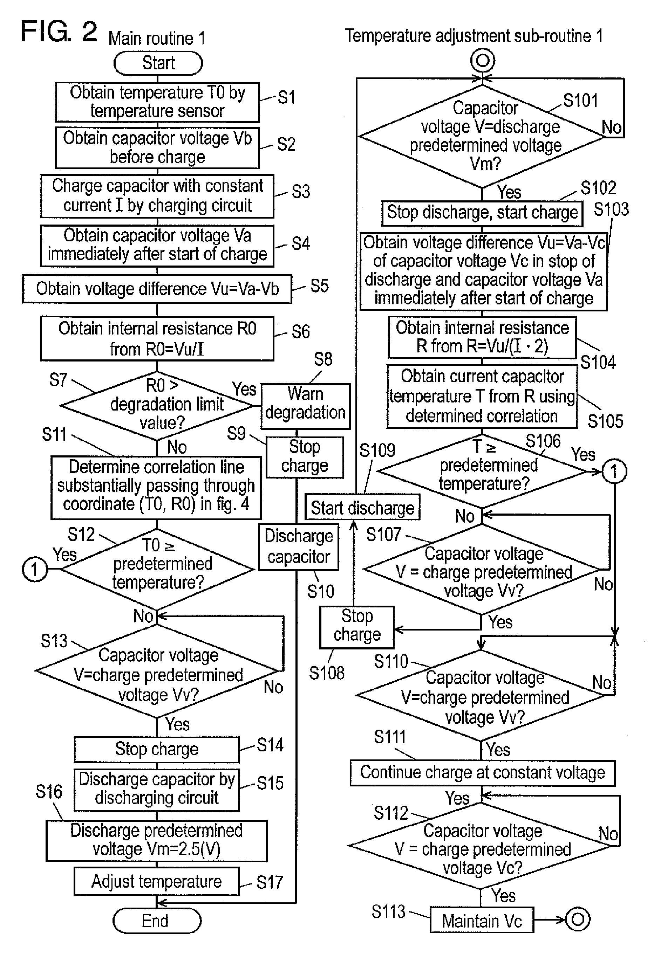

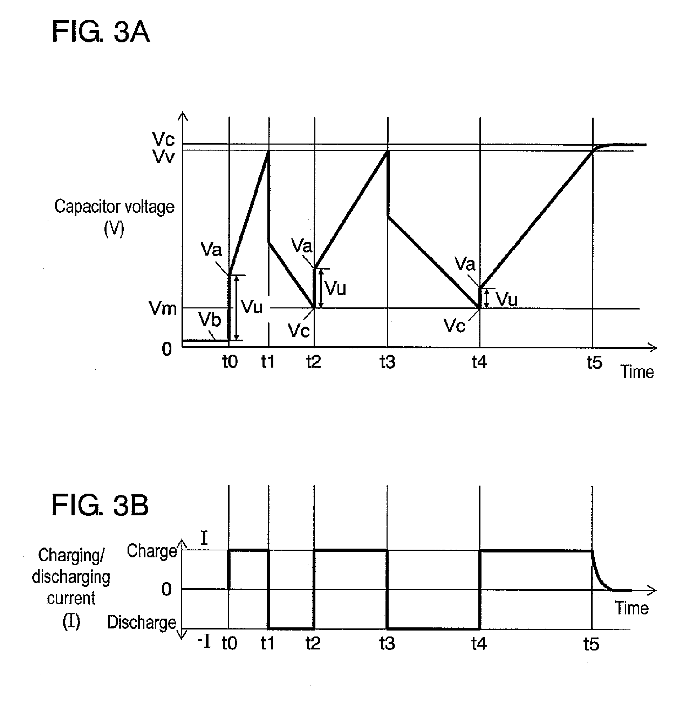

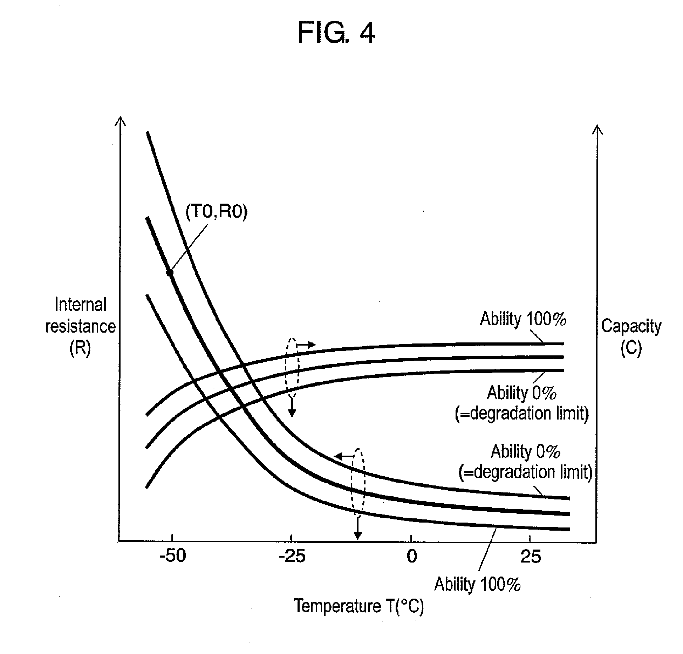

FIG. 1 is a block circuit diagram of vehicle source device 20 according to a first embodiment of the present invention. FIG. 2 is a flowchart showing an operation of vehicle source device 20 in the first embodiment of the present invention. FIG. 3A is a temporal capacitor voltage characteristics diagram and FIG. 3B is a charging/discharging current characteristics diagram in time of temperature-rise of vehicle source device 20 in the first embodiment of the present invention. FIG. 4 is a temperature characteristics diagram of an internal resistance and a capacity corresponding to degradation of the capacitor of the vehicle source device in the first embodiment of the present invention.

In FIG. 1, vehicle source device 20 is connected between direct current (DC) power supply 21 including a battery and load 22 for performing vehicle braking control.

Detailed configuration of vehicle source device 20 is as follows.

First, capacitor 23 for charging the power of DC power supply 21 is arranged as an emergency power supply. Capacitor 23 is configured by a plurality of electrical double-layer capacitors.

Charging circuit 24 for controlling charging and discharging circuit 25 for discharging charges of capacitor 23 are connected to capacitor 23.

Furthermore, in addition to DC power supply voltmeter 26 for detecting the voltage of DC power supply 21, capacitor voltmeter 27 for detecting the voltage of capacitor 23 is connected.

Capacitor ammeter 28 for detecting charging/discharging current to capacitor 23 is connected between charging circuit 24 and discharging circuit 25, and capacitor 23. The current in time of charging and in time of discharging of capacitor 23 can both be detected by being connected at such position.

Temperature sensor 29 is arranged in the vicinity of capacitor 23. The proximity temperature (ambient temperature) of capacitor 23 is thereby detected. A thermistor excelling in sensitivity is used for temperature sensor 29.

Switch 30 that switches to either the power of DC power supply 21 or the power of capacitor 23 is arranged on the load side of vehicle source device 20 in order to supply the power of capacitor 23 to load 22, where the power of DC power supply 21 is normally supplied to load 22, when the output of DC power supply voltmeter 26 lowers to a voltage value load 22 cannot be driven, and power supply of DC power supply 21 becomes insufficient or is stopped.

Switch 30 is configured so as to be switch controlled by a signal.

Charging circuit 24, discharging circuit 25, DC power supply voltmeter 26, capacitor voltmeter 27, capacitor ammeter 28, temperature sensor 29, and switch 30 are connected to microcomputer 31 serving as one embodiment of a control unit of the present invention, whereby entire vehicle source device 20 can be controlled.

The operation of vehicle source device 20 will now be described mainly using the flowchart of Fig. 2 and referencing FIG. 3 and FIG. 4 to supplement the description.

When the ignition switch is turned ON to activate the vehicle, microcomputer 31 controls vehicle source device 20 according to the flowchart shown in FIG. 2.

First, current ambient temperature T0 is obtained from the output of temperature sensor 29 according to main routine 1 shown on the left side of FIG. 2 (S1).

Capacitor voltage Vb before the charge is obtained with capacitor voltmeter 27 (S2).

Control is made to discharge the charges of capacitor 23 by discharging circuit 25 when the ignition switch is turned OFF after the use of the vehicle in order to extend the lifetime of capacitor 23, but a capacitor voltage is slightly generated as it is difficult to completely discharge the charges.

The capacitor voltage before the charge is obtained to accurately obtain the internal resistance of capacitor 23, to be hereinafter described.

The power of DC power supply 21 is charged to capacitor 23 at constant current I by charging circuit 24 (S3). In this case, charging circuit 24 is feedback controlled so as to perform charging at constant current I while monitoring the output of capacitor ammeter 28.

Capacitor voltage Va immediately after the charge is started is obtained with capacitor voltmeter 27 at the same time as the start of charging (S4).

Voltage difference Vu=Va-Vb is obtained from capacitor voltage Va immediately after the charge is started and capacitor voltage Vb before the charge obtained in S2 and S4 (S5).

The change over time of capacitor voltage V and charging current I is shown in FIG. 3A and FIG. 3B, respectively.

When charge is started with charging current (constant current) I at time t0, as shown in FIG. 3B, capacitor voltage V steeply rises due to the internal resistance of capacitor 23 corresponding to the temperature in time of activation, as shown in FIG. 3A, and thereafter, V rises with time since I is constant and charge is being carried out.

Microcomputer 31 reads the voltage output of capacitor voltmeter 27 before the supply and immediately after the supply of charging current I to capacitor 23 as Vb and Va, respectively, in order to obtain Vu.

Returning to FIG. 2, internal resistance R0 immediately after the activation of capacitor 23 is obtained from Vu obtained in S5 (S6). R0 is obtained with the following equation (1).

$$R0 = Vu/I \qquad \text{Equation (1)}$$

Determination is made on whether or not the obtained R0 has reached a degradation limit value (ability 0%) of capacitor 23 (S7).

Regarding the degradation limit value of the internal resistance of capacitor 23, the internal resistance in time of degradation with respect to a plurality of capacitors 23 is obtained on average in advance, and stored in a ROM (not shown) connected to microcomputer 31.

If R0 is larger than the degradation limit value (Yes in S7), microcomputer 31 notifies to a computer (not shown) on the vehicle side that capacitor 23 is degrading to warn degradation to the driver (S8).

Subsequently, charge is immediately stopped for safety (S9), the charges of capacitor 23 are discharged (S10), and the operation of vehicle source device 20 is terminated.

If R0 is lower than or equal to the degradation limit value (No in S7), microcomputer 31 determines one of a plurality of correlations between temperature T and internal resistance R from T0 and R0 while charging capacitor 23 (S11).

Specifically, the correlation is determined through the following principle and method with reference to FIG. 4.

FIG. 4 is a graph showing the temperature characteristics of internal resistance R and capacity C of capacitor 23, and also showing a state where capacitor 23 changes from ability 100% to ability 0%. In FIG. 4, left vertical axis indicates internal resistance R and right vertical axis indicates capacity C.

As apparent from FIG. 4, internal resistance R becomes larger as the temperature lowers or the ability lowers. On the other hand, the capacity C becomes smaller as the temperature lowers or the ability lowers.

Therefore, the accurate temperature T inside capacitor 23 can be determined by obtaining R or C if the correlation of temperature T and internal resistance R or the correlation of temperature T and capacity C corresponding to the ability is known.

T is obtained in this manner because the temperature output of temperature sensor 29 and the temperature inside capacitor 23 do not necessarily match due to the installed position of temperature sensor 29, heat capacity of capacitor 23, and the like in the middle of using vehicle source device 20.

However, change in the temperature characteristics of C by temperature T is barely seen over a wide range from about -25° C to about 25° C, as shown in FIG. 4. Therefore, if C is obtained and T of the inside of capacitor 23 is obtained, the error becomes extremely large as T becomes higher.

Although the temperature characteristics of R is non-linear, change by T is sufficiently obtained in one to one ratio, and thus an accurate T inside capacitor 23 can be obtained by obtaining R.

According to such principle, current accurate T corrected with change due to ability of capacity 23 can be obtained by obtaining R.

The correlation between T and R corresponding to the ability of current capacitor 23 is necessary to obtain T.

This is achieved by obtaining a correlation line that substantially satisfies R0 at T0, that is, that substantially passes through coordinate (T0, R0) of FIG. 4 from T0 and R0 obtained in S1 and S6.

In this regards, on the assumption that T0, which is the temperature output of temperature sensor 29, and internal temperature T of capacitor 23 are substantially equal immediately after the activation, R0 at this point is obtained to obtain a more accurate correlation point (coordinate) of T and R.

The correlation line substantially passing through the correlation point (T0, R0) is determined as reflecting the ability of current capacitor 23. In the first embodiment, assuming the coordinate (T0, R0) is on a correlation line (shown with heavy line) intermediate of ability 100% and 0% of the three correlation lines of FIG. 4, the intermediate correlation line is selected and determined.

If the ability of capacitor 23 lowers, R0 becomes larger even at the same T0 in time of activation, and thus a correct correlation line (correlation line on upper side in FIG. 4) with lower ability can be determined.

Temperature sensor 29 is installed at a position not subjected to heat influence of the circuit serving as a heat generating source such as charging circuit 24.

Therefore, if T0 is influenced by heat generating source and indicates a value higher than the original temperature, the coordinate (T0, R0) will be on the correlation line that is degraded than the actual ability, and thus a false correlation line might be selected, but such mistake is prevented by taking the installing position of temperature sensor 29 into consideration in the first embodiment.

Therefore, an accurate temperature control of capacitor 23 becomes possible.

Furthermore, since the correlation line is determined only at immediately after the activation at when the temperature output of temperature sensor 29 and the temperature inside capacitor 23 substantially match, temperature-rise of capacitor 23 can be controlled at higher accuracy.

Therefore, in terms of operation, the correlation line substantially including the coordinate (T0, R0) obtained in S1, S6 is selected and determined out of the plurality of correlation lines of the temperature T and the internal resistance R obtained in advance for every ability of capacitor 23 and stored in the ROM (not shown) connected to microcomputer 31.

Although only three correlation lines of T and R for every degradation of capacitor 23 are illustrated in FIG. 4, this is merely to clarify FIG. 4. Actually, more number of correlation lines are stored to obtain a more accurate T.

Returning to the flowchart of FIG. 2, after determining the correlation of T and R in S11, if temperature T0 of temperature sensor 29 is higher than or equal to a predetermined temperature (e.g., target 25° C) (Yes in S12), capacitor 23 does not need to be temperature-raised, and thus the process jumps to S110, to be hereinafter described, where capacitor 23 is fully charged, and the temperature-raising operation is terminated.

If T0 has not reached the predetermined temperature (No in S12), the following temperature-raising operation is performed.

First, determination is made on whether or not voltage V of capacitor 23 is equal to charge predetermined voltage Vv (S13). This corresponds to the determination on terminating the charge continued from S3.

Charge predetermined voltage Vv is the upper limit voltage at which capacitor 23 can be charged at constant current in the first embodiment. Thus, current I flows to capacitor 23 as long as possible, and thus the temperature can be raised faster by that much.

Since capacitor 23 includes a plurality of capacitors, charge predetermined voltage Vv is the voltage in a state the capacitors are connected.

If voltage V of capacitor 23 has not reached Vv (No in S13), S13 is repeated until Vv is reached.

If voltage V of capacitor 23 is equal to Vv (Yes in S13), charging circuit 24 is controlled to immediately stop the charging (S14).

The charges of capacitor 23 are discharged at constant current -I having the same absolute value as in time of charging by discharging circuit 25 (S15). The discharge is carried out at constant current -I having the same absolute value as in time of charging in the first embodiment, but discharge does not necessarily need to be particularly carried out with the constant current having the same absolute value.

However, since the discharging becomes slow if the absolute value of the discharging current is small, the absolute value of greater than or equal to the charging current is desirable.

The change over time of capacitor voltage V and charging/discharging current I up to this point will be described with reference to FIG. 3A and FIG. 3B.

In FIG. 3A, charge is started at time t0, and capacitor voltage V rises with time, but V eventually becomes equal to charge predetermined voltage Vv at time t1 (S13 of FIG. 2).

At time t1, charge is stopped (S14 of FIG. 2) and discharge is started (S15 of FIG. 2), where current is inverted from I to -I, and steep voltage drop of capacitor voltage V due to internal resistance R of capacitor 23 corresponding thereto occurs.

The voltage drop is twice the voltage rise Vu of time t0 if internal resistance R remains at R0 since the current is inverted, but as charge is already performed at time t1, temperature of capacitor 23 rises therewith, and internal resistance R at t1 is smaller than R0 in time of activation.

Therefore, the voltage drop of capacitor voltage V becomes a value less than twice Vu at t0.

The discharge is thereafter carried out with time at constant current -I, and capacitor voltage V lowers. Microcomputer 31 monitors the output of capacitor ammeter 28 so that constant current -I becomes constant, and feedback controls discharging circuit 25.

The slope of capacitor voltage V lowering from time t1 to t2 is relatively gradual compared to the slope for rise in time of activation charging (time t0 to t1). This is because internal temperature T of capacitor 23 rises by generated heat resulting from charging in time t0 to t1, whereby internal resistance R of capacitor 23 decreases from correlation of T and R of FIG. 4 and the capacity recovers.

Returning to FIG. 2, after starting the discharge at S15, discharge predetermined voltage Vm is set to 2.5V (S16).

Discharge predetermined voltage Vm is the voltage at the time when the discharge is terminated determined in advance, and is Vm=2.5V, which is the minimum voltage where the constant current discharge of discharging circuit 25 is allowed, in the first embodiment. Therefore, capacitor 23 can be discharged as much as possible, current can be flowed longer by that much, and the temperature can be raised faster.

After setting discharge predetermined voltage Vm, temperature adjustment sub-routine 1 of capacitor 23 is executed (S17).

Temperature adjustment sub-routine 1 is shown in the flowchart of the right half of FIG. 2.

Jumping to temperature adjustment sub-routine 1, capacitor voltage V and discharge predetermined voltage Vm are first compared (S101).

If V has not reached Vm (No in S101), the process returns to S101 until Vm is reached.

If capacitor voltage V has reached discharge predetermined voltage Vm (Yes in S101), discharge is stopped through discharging circuit 25, and charge is started immediately thereafter again at constant current T (5102).

Voltage difference Vu=Va-Vc of capacitor voltage Vc at the time when the discharge is stopped and capacitor voltage Va immediately after the charge is started is obtained (S103).

In order to obtain Vc and Va, the stopping of discharge and the starting of charge are performed substantially simultaneously, and thus microcomputer 31 sequentially reads the voltage data from capacitor voltmeter 27 at fastest speed. The data values immediately before and immediately after the voltage suddenly changes are respectively searched for obtaining Vc and Va.

Internal resistance R of capacitor 23 is obtained from obtained Vu with the following equation (2) (S104).

$$R=Vu/(I\times2) \qquad \text{Equation (2)}$$

Equation (2) differs from equation (1) in that the denominator of equation (2) is (I$\times$2). This is because the change in current at the time when switched from discharge to charge is I-(-I)=(I$\times$2).

Current capacitor temperature T is obtained from R obtained in S104 using the correlation (see FIG. 4) of T and R already determined in S11 (SI05).

Determination is made on whether or not T is higher than or equal to predetermined temperature (25°C) (S106), where if T is higher than or equal to the predetermined temperature (Yes in S106), the process jumps to S110 to be hereinafter described, where capacitor 23 is fully charged and temperature-raising operation is terminated.

If T has not reached the predetermined temperature (No in S106), charge is continued, and determination on whether capacitor voltage V has reached charge predetermined voltage Vv is made (S107). If not reached (No in S107), the process returns to S107 to continue charging until V becomes Vv.

When V reaches Vv (Yes in S107), charge is stopped (S108), and the discharge is started (S109).

Subsequently, the process returns to S101 and similar operation is repeated until T becomes higher than or equal to the predetermined temperature in S106. Since charge/discharge is repeated, the temperature of capacitor 23 rises.

That is, summarizing the operation of the temperature adjustment sub-routine, a series of operations of charging again after discharging, obtaining internal resistance R of capacitor 23 from voltage difference Vu of capacitor voltage Vc at the time when the discharge is stopped and capacitor voltage Va immediately after the charge is started, obtaining capacitor temperature T corresponding thereto, and continuing charging again if lower than the predetermined temperature is repeated until capacitor temperature T becomes the predetermined temperature.

When T becomes the predetermined temperature (Yes in S12, Yes in S106), determination is made on whether or not capacitor voltage V by charging has reached charge predetermined voltage Vv since charge is current being carried out (S110).

Since charge predetermined voltage Vv is the upper limit voltage at which the charging can be performed at constant current, it also corresponds to the voltage of switching the charging from a constant current control to a constant voltage control. This is because control must be made to slowly store the charges at a constant voltage near the rated voltage of the capacitor in order to fully charge the capacitor. This means that the timing of performing the switch is V=Vv.

In other words, considering each capacitor (electrical double-layer capacitor) as an equivalent circuit, the capacitor corresponds to that in which an extremely large number of microscopic capacitors are connected in parallel, where full charge is obtained after the charges are stored in all the microscopic capacitors, but the rated voltage of the capacitor will appear to be reached even if the charges are not spread to all the microscopic capacitors when charge is continued at the constant current, and thus if charge is stopped in such state, the voltage drop occurs in the capacitor as the charges are not spread.

In order to avoid this, the switch is made to the constant voltage control to gradually perform charging and realize full charge, so that the charges spread to all the microscopic capacitors.

If V has not reached Vv in S110 (No in S110), the constant current charge is continued until Vv is reached (return to S110).

When V becomes equal to Vv (Yes in S110), charging circuit 24 is switched from constant current charging to constant voltage charging, and charge is continued (S111).

Determination is then made on whether or not V has reached charge rated voltage Vc (S112). Charge rated voltage Vc is the voltage at the time when capacitor 23 is fully charged.

If V has not reached Vc (No in S112), full charge is not obtained, and thus the process returns to S112 and charge is continued until Vc is reached.

When V becomes equal to Vc (Yes in S112), full charge is obtained, and Vc is maintained by continuously applying voltage Vc to capacitor 23 (S113), and the process returns from temperature adjustment sub-routine 1.

The voltage of capacitor 23 is maintained at Vc to prevent voltage drop by self discharge etc. of capacitor 23.

Capacitor 23 then reaches the predetermined temperature (target temperature) and is in a fully charged state.

S17 of main routine 1 (flow chart of left half) of FIG. 2 is then terminated, and thus main routine 1 is terminated.

The change over time of capacitor voltage V and charging/discharging current I with respect to the operations described above is described in FIG. 3A and FIG. 3B.

Description has been made up to time t2, and the description thereafter will be described below (from S101 to end of flowchart of FIG. 2).

When capacitor voltage V becomes equal to discharge predetermined voltage Vm in S101, discharge is completed. The time thereof is t2.

At time t2, the voltage of the capacitor is 2.5V in the first embodiment, and thus if re-charging (S102) is performed from such state, voltage rise (correspond to Vu) of capacitor voltage V same as in time of activation occurs immediately after the start of re-charge.

However, temperature T of capacitor 23 is raised since charging and discharging have been performed once before time t2.

Therefore, since internal resistance R becomes smaller than at time t0 from FIG. 4, voltage difference Vu at time t2 becomes smaller than Vu at time t0.

Charge is thereafter performed with time, but since the temperature of capacitor 23 is already raised to a certain extent, internal resistance R becomes small, and as a result, the time (t2 to t3) until capacitor voltage V reaches charge predetermined voltage Vv becomes longer.

Similarly, the voltage drop width at the time when the charge is stopped and the discharge is started at time t3 becomes small compared to that of time t1, and the change (slope) of capacitor voltage V over time in discharging also becomes small. This is because capacitor 23 has been temperature-raised.

In the first embodiment, voltage difference Vu of the capacitor voltage from when the discharge is stopped to when the charge is started at time t4 becomes very small, where when R is calculated from Vu with equation (1) (S104 of FIG. 2) and T is obtained from R with reference to FIG. 4 (S105 of FIG. 2), it is found that the predetermined temperature (target temperature) is reached (S106 of FIG. 2).

Therefore, capacitor 23 is temperature-raised up to the target temperature by performing charge/discharge for two times.

Although the temperature-rise is completed, capacitor 23 then must be fully charged since discharge is terminated at time t4.

Specifically, charge is performed at a constant current until capacitor voltage V reaches charge predetermined voltage Vv from time t4 (S110 of FIG. 2), where when V=Vv at time t5, switch is made to constant voltage charging and charge is continuously performed (S111 of FIG. 2).

When constant voltage charge is performed at time t5, charging current I rapidly lowers as shown in FIG. 3B, and the current becomes substantially zero at full charge. Capacitor voltage V then becomes equal to charge rated voltage Vc (S112 of FIG. 2), and Vc is thereafter continuously maintained (S113 of FIG. 2).

Capacitor 23 is temperature raised and fully charged in this manner.

As apparent from FIG. 3A, voltage difference Vu of the capacitor voltage necessary for obtaining capacitor temperature T is always measured at the start of charging (time t0, t2, t4), but the voltage drop of capacitor voltage V at the time when switched to discharge (time t1, t3) after charging may be measured to obtain internal resistance R and to obtain temperature T inside capacitor 23.

In the first embodiment, capacitor temperature T is not obtained from the voltage drop for the following reasons.

Capacitor 23 will be thereafter discharged even if T is obtained at time t1, t3, ⋯.

Therefore, even if T has reached the predetermined temperature at time t1, t3, ⋯, full charge must be performed after discharge is performed once.

The time t2, t4, ⋯ at when switch is made from discharge to charge is always passed, and it is not too late to obtain T at that point.

Therefore, there is no necessity to obtain T at time t1, t3, ···.

For such reason, T is obtained at time t2, t4, ··· in the first embodiment.

According to such configuration and operation, the correlation between temperature and internal resistance corresponding to the ability of capacitor 23 is determined and temperature T of the inside of capacitor 23 is accurately obtained through the charge/discharge operation using the same, and thus vehicle source device 20 capable of accurately temperature-raising capacitor 23 to the target temperature is obtained.

(Second embodiment)

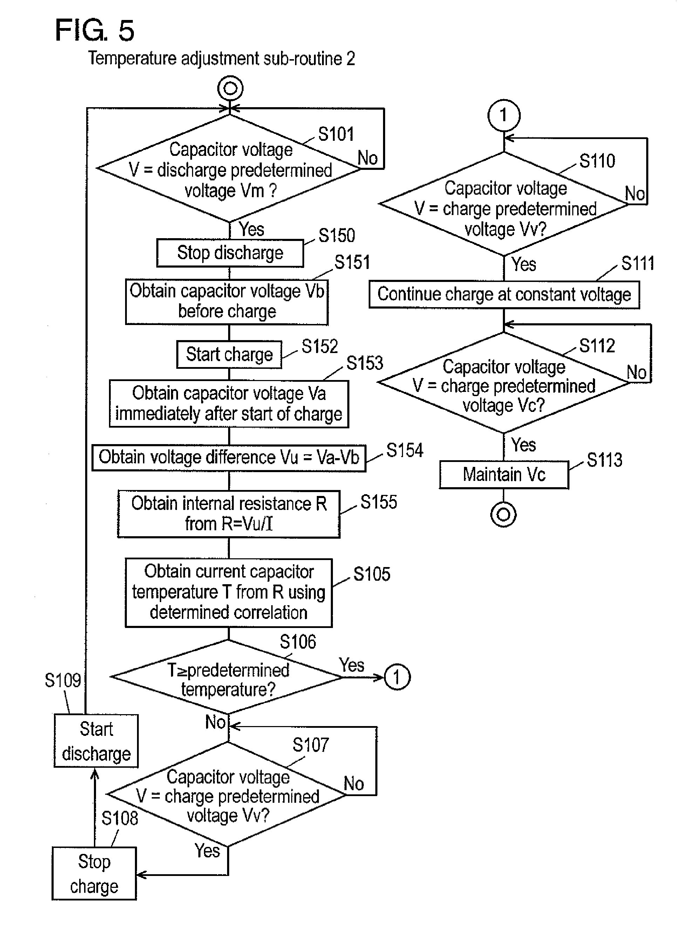

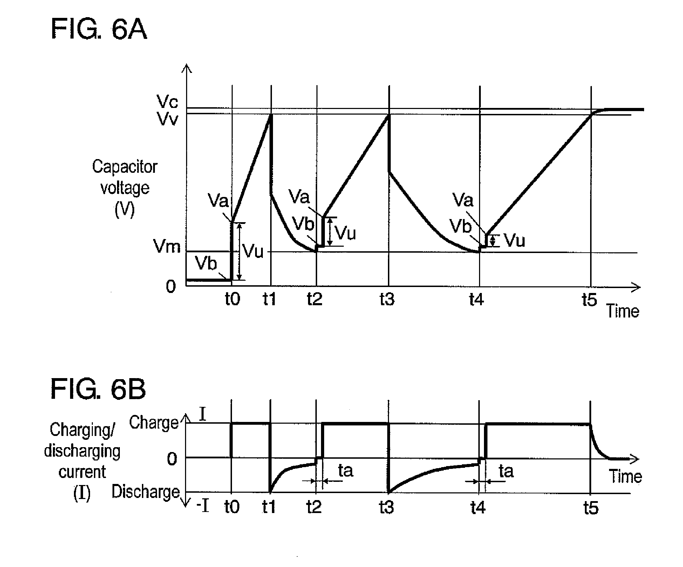

FIG. 5 is a flowchart showing the operation of vehicle source device 20 according to a second embodiment of the present invention. FIG. 6A is a temporal capacitor voltage characteristics diagram and FIG. 6B is a charging/discharging current characteristics diagram in time of temperature rise of vehicle source device according to the second embodiment of the present invention.

The configuration of the second embodiment is substantially the same as the configuration of the first embodiment, and thus description will be made with reference to FIG. 1 and detailed description of the same portions will be omitted.

Difference lies in that discharging circuit 25 has a configuration in which a discharge switch (not shown) that is turned ON/OFF by a signal of microcomputer 31 and a load resistor (not shown) are connected in series.

Therefore, when discharging the charges of capacitor 23, the discharge switch arranged in discharging circuit 25 is turned ON to flow the current from capacitor 23 to the load resistor to perform the discharge, and is turned OFF to stop the discharge.

According to discharging circuit 25 having such configuration, the circuit is simplified compared to the constant current discharging current of the first embodiment.

The operation of the vehicle source device according to the second embodiment will now be described.

The main routine in the flowchart showing the operation is the same as in the first embodiment, and thus detailed description thereof will be omitted, and temperature adjustment sub-routine 2, which is the feature of the operation, will be described with reference to FIG. 5.

In FIG. 5, the same step numbers are denoted for the same operations as temperature adjustment sub-routine 1 of FIG. 2, and detailed description will be omitted.

Jumping from the main routine to temperature adjustment sub-routine 2, determination is made on whether or not current capacitor voltage V has reached discharge predetermined voltage Vm (=2.5V) (S101), where if not reached (No in S101), the process returns to S101 until reached.

If capacitor voltage V has reached Vm (Yes in S101), discharge is stopped (S150). The discharge is stopped by turning OFF the discharge switch as described above.

After the discharge is stopped, the discharging current of capacitor 23 becomes substantially zero. The voltage between the ends of capacitor 23 slightly rises from discharge predetermined voltage Vm.

The voltage is obtained by capacitor voltmeter 27 as capacitor voltage Vb before the charge (S151). The time necessary for obtaining Vb is ta.

The charging to capacitor 23 then starts at constant current I (S152).

In this case, capacitor voltage Va immediately after the charge is started is obtained with capacitor voltmeter 27 (S153).

Voltage difference Vu=Va-Vb is obtained from obtained Va, Vb (S154).

Internal resistance R of capacitor 23 will then be obtained, but since voltage difference Vu at the time when the current is stopped once is obtained, the equation for obtaining R is equation (1) and not equation (2) used in the first embodiment (S155).

This is because the current value at the time when Vu is obtained is constant current I in time of charging.

Therefore, since discharge is performed in an outcome of matter by the load resistor in the second embodiment, the current at the time when the discharge is completed might change due to environment.

If the discharging current is also controlled to a constant value as in the first embodiment, the charge is started immediately after the termination of discharge, and internal resistance R can be accurately obtained from voltage difference Vu before and after from equation (2), but if the charge is started immediately after the termination of the discharge in the second embodiment, the current change width at the time becomes difficult to accurately obtain, and thus time ta is temporarily provided between discharge and charge.

The output of capacitor ammeter 28 is read by microcomputer 31 in order to obtain the current change width in the second embodiment, but since the output of capacitor voltmeter 27 also must be simultaneously read to obtain Vu, either microcomputer 31 capable of performing high speed process or a plurality of microcomputers 31 must be used.

However, with such configuration, microcomputer 31 becomes higher cost and more complicated than the first embodiment even though discharging circuit 25 is simplified.

Therefore, in the second embodiment, capacitor voltage Vb before the charge is obtained after stopping the current once after the termination of the discharge and the constant current charge is thereafter resumed.

The operation is the same as in temperature adjustment sub-routine 1 after S155, and thus the description on the operations after S105 will be omitted.

The temporal charging/discharging characteristics diagram in time of temperature-rise of the vehicle source device according to the characteristic operation described above is shown in FIG. 6A and FIG. 6B.

As shown in Fig. 6A, charge is performed until capacitor voltage V reaches charge predetermined voltage Vv with the operation same as the first embodiment from time t0 to t1.

The charge is then stopped and the discharge switch is turned ON to start the discharge at time t1. In this case as well, capacitor voltage V exponentially lowers after a steep voltage drop, similar to the first embodiment, but gradually lowers with time.

On the other hand, the discharging current flows the most at time t1 as shown in FIG. 6B, and gradually decreases exponentially with time.

This is because discharging circuit 25 discharges by load resistor. That is, FIGS. 6A and 6B show characteristics in that since the load resistance value is constant, when the voltage of capacitor 23 is added, the current having the value obtained by dividing such value with the load resistance value flows to the load resistor, and as time elapses, the charges of the capacitor 23 exponentially decreases, and the voltage and the current decrease therewith.

When capacitor voltage V reaches discharge predetermined voltage Vm at time t2, the discharge switch is turned OFF to stop the discharge. Accordingly, the discharging current becomes substantially zero as shown in FIG. 6B, and capacitor voltage V slightly rises as shown in FIG. 6A.

Voltage Vb is measured, and after measurement time ta is elapsed, charge is again started at constant current I.

The steep voltage rise at this point is obtained as Vu, and capacitor temperature T is obtained in S155 and S105 of FIG. 5.

As a result, in the example of FIG. 6A and FIG. 6B, capacitor temperature T has not reached the predetermined temperature, and thus charge is performed until capacitor voltage V reaches charge predetermined voltage Vv, and thereafter, discharge is performed at time t3.

The change in voltage or current of the capacitor in time of discharge lowers exponentially over time, but the time until capacitor voltage V reaches discharge predetermined voltage Vm becomes longer in t3 to t4 than in t1 to t2.

This is because the internal temperature of capacitor 23 is raised higher than the first time through charge/discharge of the second time.

Similarly, the discharge is stopped at time t4, and after time ta is elapsed, charge is again performed. Capacitor temperature T obtained from Vu obtained at this point has reached the predetermine temperature, and thus switch is made to the constant voltage charging if capacitor voltage V has reached charge predetermined voltage Vv to perform charging up to charge rated voltage Vc to obtain full charge.

According to such configuration and operation, capacitor 23 can be accurately temperature-raised up to the target temperature similar to the first embodiment, and furthermore, discharging circuit 25 is simplified, whereby a vehicle source device of lower cost can be realized.

In the first embodiment, discharge is forcibly performed at a constant current and current stopping time ta is not necessary, and thus discharging circuit 25 becomes complicating, but capacitor 23 is temperature-raised faster than in the second embodiment.

In the second embodiment, however, temperature-rise of capacitor 23 takes time but lower cost is achieved due to simplification of discharging circuit 25.

Therefore, selection is made depending on the situation such as, the first embodiment may be selected in the application where speed of temperature-rise is important and the second embodiment may be selected in the application where cost is important.

(Third embodiment)

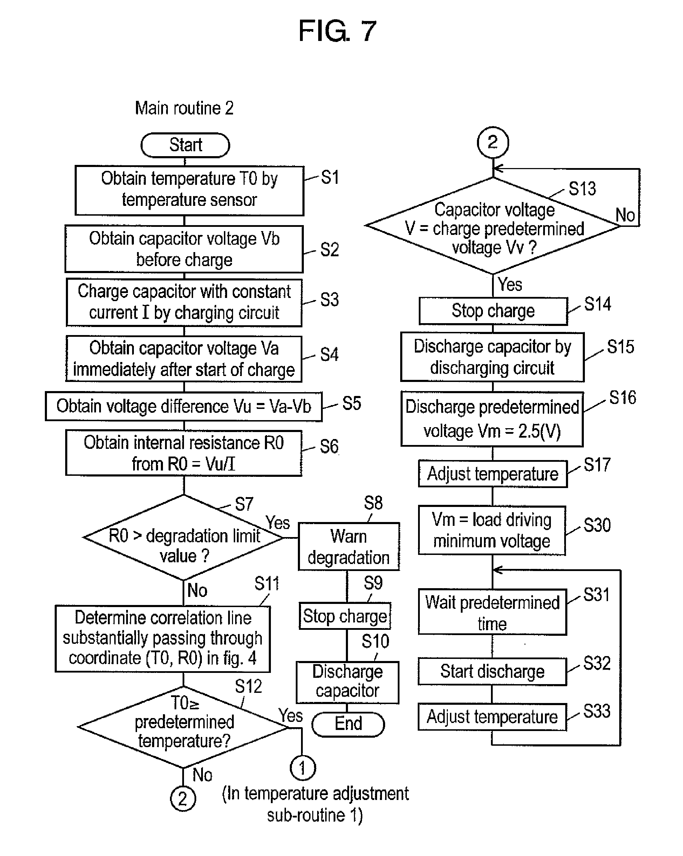

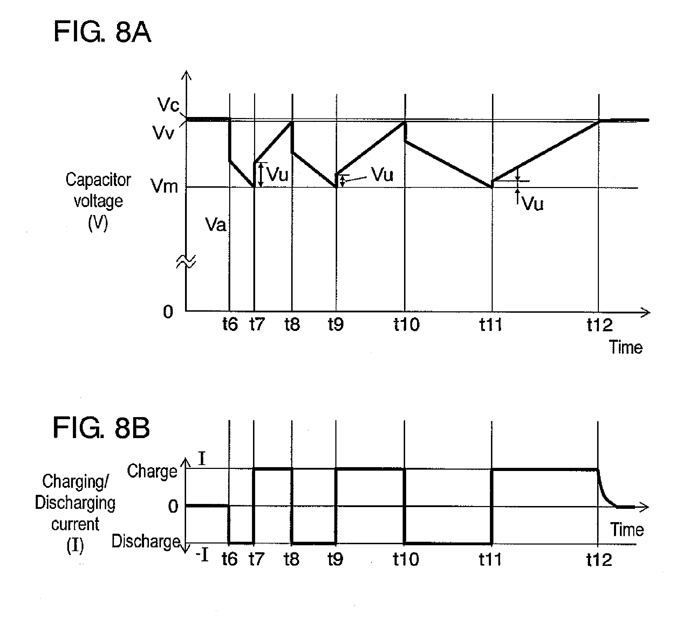

FIG. 7 is a flowchart showing the operation of vehicle source device 20 according to a third embodiment of the present invention. FIG. 8A is a temporal partial capacitor voltage characteristics diagram and FIG. 8B is a temporal partial charging/discharging current characteristics diagram in time of temperature-rise of vehicle source device according to the third embodiment of the present invention.

The configuration of the third embodiment is substantially the same as the configuration of the first embodiment, and thus description will be made with reference to FIG. 1 and detailed description of the same portions will be omitted. Similar to the first embodiment, discharging circuit 25 is also a constant current discharging circuit.

In FIG. 7, same reference numerals as in FIG. 2 are used for the operating portion same as the first embodiment and the description will be omitted.

The characteristic portions of the third embodiment lie in that the operation after S30 is added after the execution (S17) of temperature adjustment sub-routine 1 in the flowchart (main routine 2) of FIG. 7. The operation will be described below.

In the first and second embodiments, the flowchart is terminated after the execution of S17 as shown in FIG. 2, and thus temperature adjustment of capacitor 23 is performed only in time of vehicle activation.

In the third embodiment, on the other hand, the charge/discharge operation is repeated until the temperature of capacitor 23 becomes the predetermined temperature for every elapse of predetermined time from vehicle activation even after the temperature adjustment in S17 is performed. Capacitor temperature T thus can be constantly maintained at the predetermined temperature. This operation will be specifically described using main routine 2 of FIG. 7.

First, operations same as the first embodiment are performed from S1 to S17 to perform temperature-raise of capacitor 23 in time of vehicle activation. Discharge predetermined voltage Vm in this case is 2.5V as shown in S16.

Discharge predetermined voltage Vm is then set to the load driving minimum voltage (S30). The load driving minimum voltage is the minimum voltage necessary for driving load 22.

A predetermined time (e.g., order of ten minutes) is then waited (S31).

Thereafter, after the predetermined time has elapsed, discharging of capacitor 23 starts at constant current (-I) (S32).

Temperature adjustment sub-routine 1 is executed in this state to raise the temperature of capacitor 23 to the predetermined temperature (S33).

The process again returns to S31 when the predetermined temperature is reached.

A portion (time t6 to t12) of a specific example of the above operation is shown in FIG. 8A and Fig. 8B as temporal change of capacitor voltage V and charging/discharging current I.

First, capacitor voltage V is near Vc as shown up to time t6 of FIG. 8A and charging/discharging current I is substantially zero as shown in FIG. 8B until the predetermined time (t6) is elapsed.

At predetermined time t6, the discharge is started at constant current (-I) as shown in FIG. 8B (S32 of FIG. 7). Accompanied therewith, capacitor voltage V lowers as shown in FIG. 8A.

At time t7, the discharge is stopped when capacitor voltage V becomes charge predetermined voltage Vm and charge is started at constant current I. Accordingly, capacitor voltage V rises over time after steep voltage rise Vu corresponding to internal resistance R.

Temperature T of the inside of capacitor 23 is obtained from obtained Vu. In FIG. 8A and FIG. 8B, determination is made that the predetermined temperature has not been reached at time t7, and thus charge/discharge is again performed to raise the temperature.

Similarly, charge is stopped and discharge is started at time t8 so that capacitor voltage V lowers, and discharge is stopped and charge is started, and Vu is obtained and converted to capacitor temperature T at time t9.

In FIG. 8, determination is made that the predetermined temperature has not yet been reached at time t9, and thus charge/discharge is again performed to further raise the temperature.

Charge is stopped and discharge is started at time t10 so that capacitor voltage V lowers, and discharge is stopped and charge is started, and Vu is obtained and converted to capacitor temperature T at time t11.

At this point, T obtained from Vu has reached the predetermined temperature, and thus constant current charge is performed until V=Vv (time t12), and thereafter, switch is made to the constant voltage charging to fully charge capacitor 23.

The temperature of capacitor 23 is maintained at the predetermined temperature through such operation.

In FIG. 8A and FIG. 8B, Vm is the load driving minimum voltage but this is so that power is supplied to load 22 right after interrupting the operation of FIG. 8A and FIG. 8B when the operation of FIG. 8A and FIG. 8B is during vehicle traveling and when the voltage of DC power supply 21 lowers to lower than or equal to the load driving minimum voltage during the operation of FIG. 8A and FIG. 8B.

Therefore, Vm is 2.5V during the charge/discharge operation in time of vehicle activation, and is the load driving minimum voltage during the charge/discharge operation for every elapse of a predetermined time.

In the third embodiment, the waiting time of S31 is made constant at the order of ten minutes, but if temperature T0 obtained from the output of temperature sensor 29 is low and the difference with capacitor temperature T obtained from internal resistance R of capacitor 23 is large, the waiting time is made short assuming that capacitor 23 will cool off fast, and thus the waiting time is varied according to the difference of T0 and T.

According to such configuration and operation, capacitor 23 is accurately temperature-raised up to the target temperature, and the temperature of capacitor 23 can be maintained at the predetermined time for every elapse of the predetermined time even if lowering in temperature due to elapse of time from the vehicle activation or cooling of capacitor 23 during vehicle traveling occurs, whereby the specification of vehicle source device 20 can always be satisfied, and vehicle source device 20 capable of performing a normal operation can be obtained.

(Fourth embodiment)

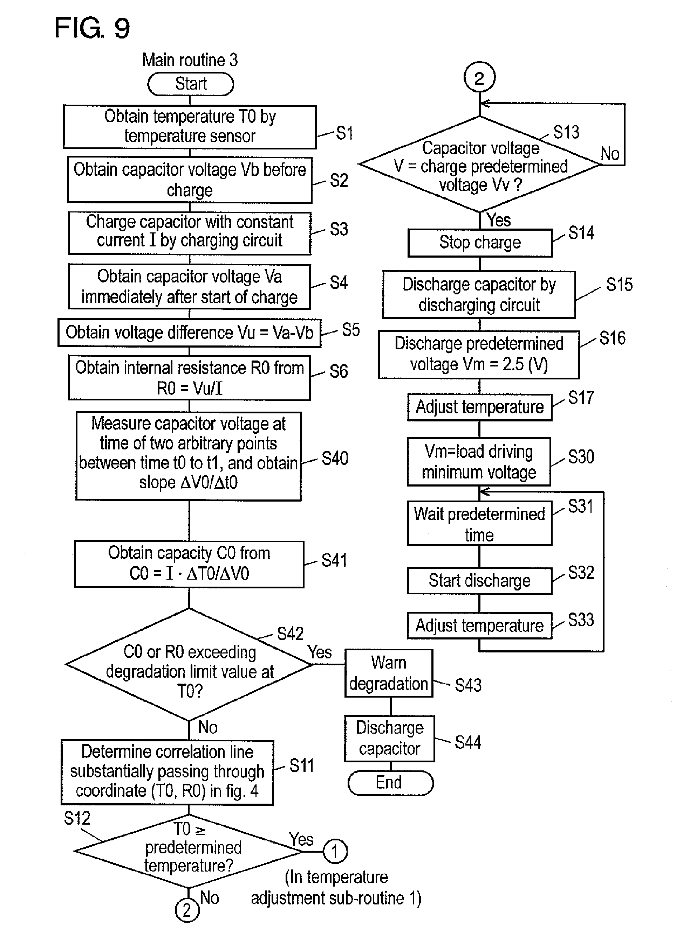

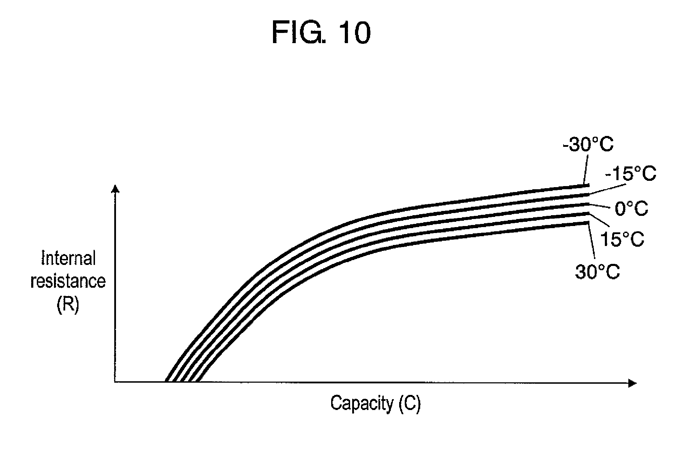

FIG. 9 is a flowchart showing the operation of vehicle source device 20 according to a fourth embodiment of the present invention. FIG. 10 is a correlation diagram showing the degradation limit value for every temperature in the capacity and the internal resistance of the capacitor of the vehicle source device according to the fourth embodiment of the present invention.

The configuration of the fourth embodiment is substantially the same as the configuration of the first embodiment, and thus description will be made with reference to FIG. 1 and detailed description of the configuration will be omitted. Similar to the first embodiment, discharging circuit 25 is also a constant current discharging circuit.

In FIG. 9, same reference numerals as in FIG. 7 are used for the operating portion same as the third embodiment and the description will be omitted.

In the first to the third embodiments, a degradation determining operation of whether or not internal resistance R0 of capacitor 23 exceeds the degradation limit value is performed in S7 of FIG. 2 in time of vehicle activation, but in the fourth embodiment, a more accurate degradation determining operation (S40 to S44) of capacitor 23 is performed before performing the temperature-raising operation of capacitor 23 in the flowchart (main routine 3) of FIG. 9.

This operation will be described in detail below.

First, in main routine 3 of FIG. 9, S1 to S6 are the same as in the first embodiment. Therefore, temperature T0 of temperature sensor 29 and internal resistance R0 of capacitor 23 are obtained in the operations from S1 up to S6.

Capacitor voltage V at the time of two arbitrary points between t0 and t1 at when charge is performed as shown in FIG. 3A is obtained, and charge speed, that is, slope ΔV0/Δt0 of capacitor voltage V during charge is obtained (S40).

Capacity C0 of capacitor 23 is then obtained from the following equation (3) (S41).

$$C0 = I \times \Delta t0 / \Delta V0 \qquad \text{Equation (3)}$$

With respect to C0 and R0 obtained in this manner, determination is made on whether either one is exceeding the degradation limit value at temperature T0 (S42).

The correlation diagram showing the degradation limit for every temperature T in capacity C and internal resistance R of capacitor 23 is shown in FIG. 10. In FIG. 10, the horizontal axis shows capacity C, and the vertical axis shows internal resistance R.

The degradation limit values are stored in advance in the ROM (not shown) connected to microcomputer 31.

At S42, since C0, R0, and temperature T0 of capacitor 23 in time of activation are known, determination is made on whether or not coordinate (C0, R0) exceeds the degradation limit value (C-R degradation limit correlation line) at temperature T0 shown in FIG. 10.

If coordinate (C0, R0) is on the lower side of each C-R degradation limit correlation line, determination can be made that capacitor 23 has not reached the degradation limit value, but if coordinate (C0, R0) is on the upper side of each C-R degradation limit correlation line, determination can be made that capacitor 23 has reached the degradation limit since each C-R degradation limit correlation line is exceeded.

If the degradation limit value has not been reached (No in S42), S11 and subsequent steps are executed in order. This is the same as the third embodiment, and thus the description thereof will be omitted.

At least one of C0 or R0 exceeds the degradation limit value if coordinate (C0, R0) is over each C-R degradation limit correlation line, (Yes in S42), and thus microcomputer 31 notifies the computer on the vehicle side that capacitor 23 is degrading to warn degradation to the driver (S43).

Subsequently, after discharging capacitor 23 (S44) for safety, the operation of vehicle source device 20 is terminated.

Summarizing the characteristic operation, internal resistance R0 of capacitor 23 is first obtained in time of vehicle activation (S6), the charging speed at the time when charging capacitor 23 is obtained from capacitor voltmeter 27 (S40), and capacity C0 of capacitor 23 is obtained from the charging speed with equation (3) (S41).

The obtained capacity C0 and internal resistance R0 are compared to the degradation limit values of R, C obtained in advance at the current temperature T0, where determination is made that capacitor 23 is degrading if at least one of them exceeds the degradation limit value (Yes in S42), the charges of capacitor 23 are discharged (S44), and the subsequent operations are not executed.

According to such configuration and operation, capacitor 23 can be accurately temperature-raised up to the target temperature, and furthermore, determination on degradation of capacitor 23 is performed not only with respect to internal resistance R0 but also with respect to capacity C0 before executing the temperature-raising operation of capacitor 23, and thus a vehicle source device capable of performing determination on degradation of capacitor 23 at higher accuracy is obtained.

(Fifth embodiment)

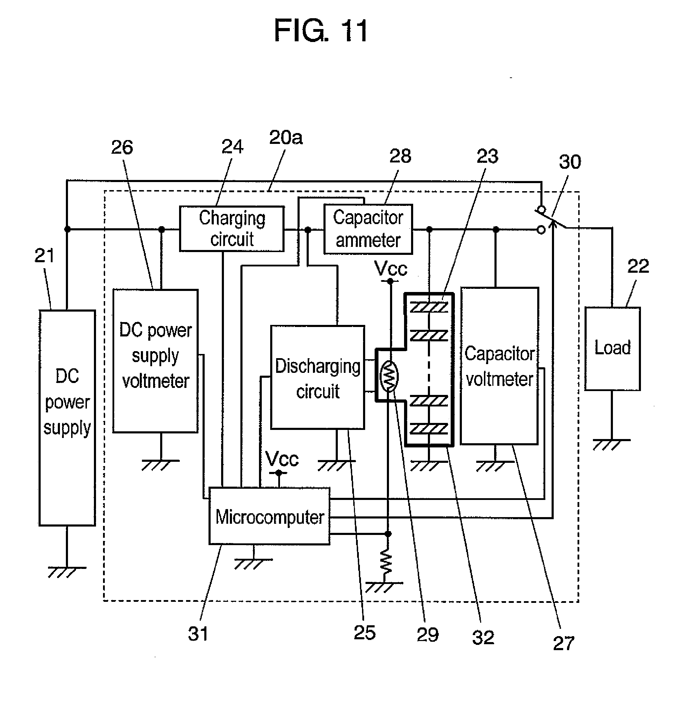

FIG. 11 is a block circuit diagram of vehicle source device 20a according to a fifth embodiment of the present invention.

In the configuration of the fifth embodiment, same reference numerals are denoted for the same portions as in the configuration (FIG. 1) of the first embodiment, and detailed description will be omitted.

The characteristic in the configuration of the fifth embodiment lies in that heater 32 is connected to discharging circuit 25.

Heater 32 has a configuration including capacitor 23 and temperature sensor 29. Heater 32 can transmit heat to both.

According to such configuration, the power in time of discharge is merely consumed simply by the load resistor (not shown) in the configuration FIG. 1, but the power in time of discharge can be converted to heat by having the portion corresponding to the load resistor as heater 32 as in the fifth embodiment.

This heat is transmitted to capacitor 23 or temperature sensor 29, so that temperature-raising speed of capacitor 23 can be increased, and discharging power can be used without waste.

Furthermore, since temperature sensor 29 is also arranged in heater 32, the proximity temperature of capacitor 23 can be detected at satisfactory accuracy following the temperature-rise of heater 32.

Heater 32 is connected to discharging circuit 25 of the first embodiment, but heater 32 may be arranged in any of the second to the fourth embodiments.

The operation of the fifth embodiment may be the same as one of the first to the fourth embodiments, and thus detailed description of the operation will be omitted.

According to such configuration and operation, capacitor 23 can be accurately temperature-raised up to the target temperature, and furthermore, heater 32 arranged so as to transmit heat to capacitor 23 consumes the power in time of discharge, and thus a vehicle source drive capable of rapidly temperature-raising capacitor 23 without wasting power is obtained.

(Sixth embodiment)

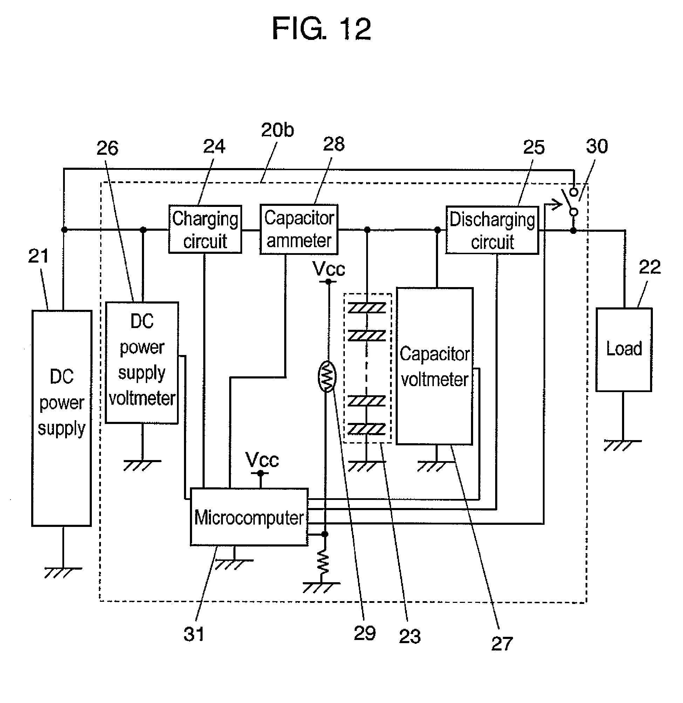

FIG. 12 is a block circuit diagram of vehicle source drive 20b according to a sixth embodiment of the present invention.

In the configuration of the sixth embodiment, same reference numerals are denoted for the portions same as in the configuration (FIG. 1) of the first embodiment, and detailed description will be omitted.

That is, the characteristics in the configuration of the sixth embodiment lie in that a step-up converter incorporating a current limiting circuit (not shown) is used for discharging circuit 25 and connected between a terminal on the load side (terminal connected to load 22) of switch 30 and the output of capacitor 23, as shown in FIG. 12.

According to such configuration, capacitor 23 can be temperature-raised by effectively using the power in time of discharge when repeating charge/discharge until the temperature of capacitor 23 reaches the predetermined temperature. The details of the operation will be described below.

The operation of the sixth embodiment is basically the same as one of the first to the fourth embodiments, and thus only the characteristic portion of the sixth embodiment will be described.

First, when the vehicle is activated, microcomputer 31 turns ON switch 30, and supplies power from DC power supply 21 to load 22. In this case, the step-up converter configuring discharging circuit 25 is not operating, and thus, the current of DC power supply 21 will not flow from switch 30 side to capacitor 23.

In this state, temperature-rise of capacitor 23 is performed according to the flowchart shown in FIG. 2. When discharging capacitor 23 in the flowchart, microcomputer 31 sends a signal to operate discharging circuit 25 (step-up converter). The output voltage stepped up by the step-up converter is set so as to be larger than the standard voltage (e.g., DC 12V) of DC power supply 21, and thus the voltage of capacitor 23 is discharged when becoming larger than the standard voltage of DC power supply 21.

Therefore, the discharged power is partially supplied to load 22, and also supplied (charged) to DC power supply 21 via switch 30 since switch 30 is closed and the power is larger than the standard voltage of DC power supply 21. Although not shown, one part of the power is supplied to other loads connected to DC power supply 21.

However, depending on the state of the load being used in the vehicle, large current might flow from capacitor 23, and thus the current limiting circuit for preventing a current of greater than or equal to a maximum current to be consumed by load 22 from flowing is incorporated in the step-up converter configuring discharging circuit 25. Thus, large current will not drastically flow.

After discharging up to the predetermined capacitor voltage, microcomputer 31 sends a signal to stop discharging circuit 25. The discharge of capacitor 23 is thereby stopped.

According to such configuration, the power discharged before temperature-rise of capacitor 23 is terminated is entirely used by the entire load of the vehicle or charged to DC power supply 21, and thus waste of the power necessary for temperature-rise can be reduced.

If DC power supply 21 becomes abnormal and becomes lower than or equal to the predetermined voltage, microcomputer 31 sends a signal to turn OFF switch 30 and operate discharging circuit 25 to supply the power charged in capacitor 23 to load 22. The output voltage of capacitor 23 is then stepped up by discharging circuit 25, and thereafter, power is supplied only to load 22 since switch 30 is turned OFF. Therefore, even if DC power supply 21 becomes abnormal, load 22 for vehicle braking etc. can be continuously driven, thereby enhancing safety.

According to such configuration and operation, capacitor 23 can be accurately temperature-raised up to the target temperature, and the power in time of discharge of capacitor 23 can be stepped up by discharging circuit 25 to be used for the entire load of the vehicle or for charging DC power supply 21, and thus a vehicle source device in which the waste of the power necessary for temperature-raise can be reduced is obtained.

INDUSTRIAL APPLICABILITY

The vehicle source device according to the present invention accurately temperature-raises the capacitor up to the target temperature at which the required performance can be obtained even in time of low temperature activation, and thus is particularly usable as an emergency power supply etc. used in electronic brake system etc. for electrically braking the vehicle.

**Claims**

1. A vehicle source device connected between a DC power supply and a load, the vehicle source device comprising:

a capacitor to be charged with a power of the DC power supply;
a charging circuit for controlling a charge on the capacitor;
a discharging circuit for discharging charges of the capacitor;
a DC power supply voltmeter for detecting a voltage of the DC power supply;
a capacitor voltmeter for detecting a voltage of the capacitor;
a capacitor ammeter for detecting a current of the capacitor;
a temperature sensor arranged in the vicinity of the capacitor;
a switch for switching to either the power of the DC power supply or the power of the capacitor to supply to the load; and
a control unit connected with the charging circuit, the discharging circuit, the DC power supply voltmeter, the capacitor voltmeter, the capacitor ammeter, the temperature sensor, and the switch; wherein
the control unit repeats a series of operations until a capacitor temperature becomes a predetermined temperature, the operation including:

obtaining a temperature from the temperature sensor in time of activation of a vehicle,
obtaining a capacitor voltage before the charge with the capacitor voltmeter, and thereafter, charges the power of the DC power supply to the capacitor at a constant current by the charging circuit,
obtaining a capacitor voltage immediately after the charge is started with the capacitor voltmeter,
obtaining an internal resistance of the capacitor from a voltage difference between the capacitor voltage immediately after the charge is started and the capacitor voltage before the charge,
determining a correlation that substantially satisfies the internal resistance at the temperature of a plurality of correlations of a temperature and the internal resistance obtained in advance according to an ability of the capacitor,
performing charge until the voltage of the capacitor becomes a charge predetermined voltage if the temperature of temperature sensor is lower than the predetermined temperature,
performing discharge the charges of the capacitor until the voltage of the capacitor becomes a discharge predetermined voltage by the discharging circuit,
again performing the charge at the constant current,
obtaining the internal resistance of the capacitor from a voltage difference between a capacitor voltage at the time when the discharge is stopped and a capacitor voltage immediately after the charge is started,
obtaining a current capacitor temperature using an already determined correlation from the obtained internal resistance of the capacitor,
performing charge until the capacitor temperature becomes the charge predetermined voltage if lower than the predetermined temperature,

again performing charge after discharge and obtains the internal resistance of the capacitor from a voltage difference between a capacitor voltage at the time when the discharge is stopped and a capacitor voltage immediately after the charge is started,
obtaining the corresponding capacitor temperature, and
again continuing performing charge if lower than the predetermined temperature.

2. The vehicle source device according to claim 1, wherein the charge predetermined voltage is an upper limit voltage at which the capacitor can be charged at a constant current.

3. The vehicle source device according to claim 1, wherein the temperature sensor is arranged at a position not subjected to thermal influence of a circuit that becomes a heat generating source.

4. The vehicle source device according to claim 1, wherein the control unit obtains the capacitor voltage before the charge by the time the next charge is started after the discharge is stopped, obtains the capacitor voltage immediately after the charge is started, and obtains the internal resistance of the capacitor from the voltage difference.

5. The vehicle source device according to claim 1, wherein the control unit repeats a charge/discharge operation until the capacitor temperature reaches the predetermined temperature for every elapse of a predetermined time from the activation of the vehicle.

6. The vehicle source device according to claim 5, wherein the discharge predetermined voltage in time of the charge/discharge operation for every elapse of the predetermined time is a load driving minimum voltage.

7. The vehicle source device according to claim 1, wherein
the control unit
obtains an internal resistance of a capacitor in time of activation of the vehicle,
obtains a charging speed at the time when charging the capacitor from the capacitor voltmeter,
obtains a capacity of the capacitor from the charging speed,
compares the obtained capacity and the internal resistance with a degradation limit value obtained in advance at the current temperature,
determines that the capacitor is degrading when at least one exceeds the degradation limit value, and
discharges the charges of the capacitor and does not execute the subsequent operations.

8. The vehicle source device according to claim 1, wherein a heater is connected to the discharging circuit, and the heater is arranged so as to convey heat to the capacitor and the temperature sensor.

9. The vehicle source device according to claim 1, wherein the discharging circuit is a step-up converter incorporating a current limiting circuit, and is connected between a terminal on the load side of the switch and the output of the capacitor.

10. The vehicle source device according to claim 9, wherein the output voltage stepped up with the step-up converter is larger than a standard voltage of the DC power supply.

# FIG. 1

# FIG. 2

**Main routine 1**

Start

Obtain temperature T0 by temperature sensor — S1

Obtain capacitor voltage Vb before charge — S2

Charge capacitor with constant current I by charging circuit — S3

Obtain capacitor voltage Va immediately after start of charge — S4

Obtain voltage difference Vu=Va-Vb — S5

Obtain internal resistance R0 from R0=Vu/I — S6

S7 — R0 > degradation limit value? — Yes — S8 Warn degradation

No — S9 Stop charge

S11 — Determine correlation line substantially passing through coordinate (T0, R0) in fig. 4

S12 — T0 ≥ predetermined temperature? — Yes — ①

No

S13 — Capacitor voltage V=charge predetermined voltage Vv? — No

Yes

Stop charge — S14

Discharge capacitor by discharging circuit — S15

S16 — Discharge predetermined voltage Vm=2.5(V)

Adjust temperature — S17

End

Discharge capacitor — S10

**Temperature adjustment sub-routine 1**

◎

S101 — Capacitor voltage V=discharge predetermined voltage Vm? — No

Yes — S102 Stop discharge, start charge S103

Obtain voltage difference Vu=Va-Vc of capacitor voltage Vc in stop of discharge and capacitor voltage Va immediately after start of charge

Obtain internal resistance R from R=Vu/(I · 2) — S104

Obtain current capacitor temperature T from R using determined correlation — S105

S109 — Start discharge

S106 — T ≥ predetermined temperature? — Yes — ①

No

S107 — Capacitor voltage V = charge predetermined voltage Vv? — No

Yes

Stop charge — S108

S110 — Capacitor voltage V=charge predetermined voltage Vv? — No

Yes

Continue charge at constant voltage — S111

Yes

S112 — Capacitor voltage V = charge predetermined voltage Vc? — No

Yes

S113 — Maintain Vc — ◎

## FIG. 3A

## FIG. 3B

# FIG. 4

# FIG. 5

Temperature adjustment sub-routine 2

## FIG. 6A

Capacitor voltage (V)

Vc
Vv
Va
Vb
Vu
Vm
Va
Vb
Vu
Va
Vb
Vu
0
t0  t1  t2  t3  t4  t5  Time

## FIG. 6B

Charging/ discharging current (I)

Charge
I
0
Discharge
-I  t0  t1  t2  t3  t4  t5  Time
ta  ta

21

# FIG. 7

Main routine 2

```
          ( Start )                              ( 2 )
                                                   |
  ┌─────────────────────────┐                      ▼
  │ Obtain temperature T0 by │ ─S1        ╱◇╲        S13
  │   temperature sensor     │         ╱       ╲
  └─────────────────────────┘      ╱ Capacitor    ╲
              │                   ◇   voltage        ◇── No
  ┌─────────────────────────┐      ╲ V = charge    ╱
  │ Obtain capacitor voltage Vb│─S2  ╲ predetermined╱
  │     before charge         │       ╲ voltage Vv?╱
  └─────────────────────────┘           ╲  ◇  ╱
              │                            │ Yes
  ┌─────────────────────────┐   ┌──────────────────┐
  │ Charge capacitor with constant│─S3│  Stop charge    │─S14
  │  current I by charging circuit│   └──────────────────┘
  └─────────────────────────┘           │
              │                   ┌──────────────────┐
  ┌─────────────────────────┐   │ Discharge capacitor by│─S15
  │ Obtain capacitor voltage Va│─S4│ discharging circuit │
  │ immediately after start of charge│└──────────────────┘
  └─────────────────────────┘           │
              │                   ┌──────────────────┐
  ┌─────────────────────────┐   │ Discharge predetermined│─S16
  │ Obtain voltage difference Vu = Va-Vb│─S5│ voltage Vm = 2.5(V) │
  └─────────────────────────┘   └──────────────────┘
              │                           │
  ┌─────────────────────────┐   ┌──────────────────┐
  │ Obtain internal resistance R0│─S6│ Adjust temperature│─S17
  │      from R0 = Vu/I       │   └──────────────────┘
  └─────────────────────────┘           │
              │             S8    ┌──────────────────┐
          ╱◇╲   S7   Yes  ┌──────┐│ Vm = load driving │─S30
        ╱      ╲─────────│ Warn ││  minimum voltage  │
       ◇ R0 > degradation◇       │degradation│└──────────────────┘
        ╲ limit value? ╱         └──────┘           │
          ╲  ◇  ╱                    │ S9    ┌──────────────────┐
              │ No      S11    ┌──────────┐│ Wait predetermined │─S31
  ┌─────────────────────────┐│ Stop charge││       time        │
  │ Determine correlation line │    └──────────┘└──────────────────┘
  │ substantially passing through│      │ S10          │
  │ coordinate (T0, R0) in fig. 4│┌──────────┐┌──────────────────┐
  └─────────────────────────┘│ Discharge ││  Start discharge  │─S32
              │       S12     │ capacitor ││                  │
          ╱◇╲      Yes  └──────────┘└──────────────────┘
        ╱   T0≥  ╲───────( End )          │
       ◇ predetermined ◇         ┌──────────────────┐
        ╲ temperature?╱            │ Adjust temperature│─S33
          ╲  ◇  ╱                  └──────────────────┘
              │ No
           ( 2 )    ( 1 )
                  (In temperature adjustment
                     sub-routine 1)
```

## FIG. 8A

Capacitor voltage (V)

Vc, Vv, Vm, Va, Vu

t6  t7  t8  t9  t10  t11  t12

Time

## FIG. 8B

Charging/ Discharging current (I)

Charge, 0, Discharge, I, -I

t6  t7  t8  t9  t10  t11  t12

Time

# FIG. 9

Main routine 3

**Start**

| Obtain temperature T0 by temperature sensor | S1 |

| Obtain capacitor voltage Vb before charge | S2 |

| Charge capacitor with constant current I by charging circuit | S3 |

| Obtain capacitor voltage Va immediately after start of charge | S4 |

| Obtain voltage difference Vu = Va-Vb | S5 |

| Obtain internal resistance R0 from R0 = Vu/I | S6 |

| Measure capacitor voltage at time of two arbitrary points between time t0 to t1, and obtain slope ΔV0/Δt0 | S40 |

| Obtain capacity C0 from C0 = I · ΔT0/ΔV0 | S41 |

C0 or R0 exceeding degradation limit value at T0? — S42 — Yes → Warn degradation — S43 → Discharge capacitor — S44 → **End**

No

| Determine correlation line substantially passing through coordinate (T0, R0) in fig. 4 | S11 |

S12 — T0 ≥ predetermined temperature? — Yes → (1) (In temperature adjustment sub-routine 1)

No → (2)

---

(2)

Capacitor voltage V = charge predetermined voltage Vv ? — S13 — No

Yes

| Stop charge | S14 |

| Discharge capacitor by discharging circuit | S15 |

| Discharge predetermined voltage Vm = 2.5 (V) | S16 |

| Adjust temperature | S17 |

| Vm=load driving minimum voltage | S30 |

| Wait predetermined time | S31 |

| Start discharge | S32 |

| Adjust temperature | S33 |

# FIG. 10

# FIG. 11

# FIG. 12

# FIG. 13

Mechanical force transmission path
Power line
Control line
Hydraulic system

<table>
<tr><td colspan="2" align="center">**INTERNATIONAL SEARCH REPORT**</td><td colspan="2">International application No.<br>PCT/JP2006/322343</td></tr>
</table>

| A. CLASSIFICATION OF SUBJECT MATTER |
|---|
| *B60L3/00*(2006.01)i, *B60L11/18*(2006.01)i, *H02J7/00*(2006.01)i, *H02J7/04* (2006.01)i, *H02J7/16*(2006.01)i |

According to International Patent Classification (IPC) or to both national classification and IPC

| B. FIELDS SEARCHED |
|---|
| Minimum documentation searched (classification system followed by classification symbols)<br>B60L3/00, B60L11/18, H02J7/00, H02J7/04, H02J7/16 |

Documentation searched other than minimum documentation to the extent that such documents are included in the fields searched

| Jitsuyo Shinan Koho | 1922-1996 | Jitsuyo Shinan Toroku Koho | 1996-2007 |
|---|---|---|---|
| Kokai Jitsuyo Shinan Koho | 1971-2007 | Toroku Jitsuyo Shinan Koho | 1994-2007 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2005-130672 A (Toyota Motor Corp.),<br>19 May, 2005 (19.05.05),<br>Claims 8, 9<br>(Family: none) | 1-10 |
| A | JP 2004-56937 A (Nissan Motor Co., Ltd.),<br>19 February, 2004 (19.02.04),<br>Par. Nos. [0018] to [0022]<br>(Family: none) | 1-10 |
| E,A | JP 2006-166542 A (Matsushita Electric Industrial Co., Ltd.),<br>22 June, 2006 (22.06.06),<br>Claim 1<br>(Family: none) | 1-10 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>05 February, 2007 (05.02.07) | Date of mailing of the international search report<br>13 February, 2007 (13.02.07) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3449226 B